# EUROPEAN PATENT SPECIFICATION

(11) **EP 3 145 635 B1**
(45) Date of publication and mention of the grant of the patent: **07.07.2021**
(21) Application number: 15731749.6
(22) Date of filing: 22.05.2015
(51) Int. Cl.: B03B 9/04, C22B 7/02

(54) **SYSTEM AND METHOD FOR RECOVERING METALS FROM A WASTE STREAM**
SYSTEM UND VERFAHREN ZUR RÜCKGEWINNUNG VON METALLEN AUS EINEM ABFALLSTROM
SYSTÈME ET PROCÉDÉ DE RÉCUPÉRATION DE MÉTAUX DANS UN FLUX DE DÉCHETS

(30) Priority: 22.05.2014 US 201462002049 P
(43) Date of publication of application: 29.03.2017
(73) Proprietor: Tav Holdings, Inc., Atlanta, Georgia 30328 (US); Valerio, Thomas, Atlanta, GA 30354 (US)
(72) Inventor: VALERIO, Thomas, Atlanta, Georgia 30354 (US)
(74) Representative: Träger, Denis
(86) International application number: PCT/US2015/032176
(87) International publication number: WO 2015/179762

(56) References cited:
- EP-A2- 2 062 647
- WO-A1-2014/056065
- DE-A1- 4 132 938
- DE-C1- 4 123 277
- None

## Description

### TECHNICAL FIELD

This disclosure generally relates to metal recovery, and more particularly relates to recovering metals from a waste stream containing metals (e.g., incinerator ash).

### BACKGROUND

Around the world, attention is paid to the adverse environmental effects of landfilling waste. Proper landfilling of waste requires large areas of land, which may be in limited supply in certain urban areas. The waste also may pose adverse environmental effects, including effects to water tables underlying disposal sites, due to contamination from chemicals and heavy metals contained in the waste.

One technique used to reduce waste volume of landfills, is waste incineration. The incineration process involves combusting the organic constituents in the waste to generate heat (which may be converted into electricity), ash, and flue gas. The resulting ash consists primarily of inorganic constituents of the waste. While most of the ash is incinerator bottom ash ("IBA") that is collected at the bottom of the incinerator's combustion chamber, some ash, known as fly ash, is entrained in the flue gas. Typically, the flue gas passes through systems that remove the fly ash and other hazardous components of the flue gas before the gas is released to the atmosphere. In some instances, the IBA and fly ash are mixed prior to disposal, resulting in "combined ash."

However, waste incineration has its own challenges. For instance, the IBA and fly ash must still be disposed of, typically in a landfill. These ash components may include heavy metals, which may require the ash be specially treated before it can be ultimately disposed of. The hazardous nature of the waste may also necessitate special disposal requirements. Further, the IBA and fly ash may include metal constituents (including copper and precious metals such as gold and silver) that can be reclaimed as a valuable resource.

Recovery of these valuable resources have been instituted in various waste streams. For example, at the end of its useful life, an automobile is shredded. This shredded material includes ferrous and non-ferrous metals. The remaining materials that are not recovered are referred to as automobile shredder residue ("ASR"), which may also include ferrous and non-ferrous metals, including copper wire and other recyclable materials. Presently, ASR is typically disposed of in a landfill. Similar efforts have been made to recover materials from whitegood shredder residue ("WSR"), which includes the waste materials left over after recovering ferrous metals from shredded machinery or large appliances. Moreover, efforts have been made to recover materials from electronic components (also known as "e-waste" or "waste electrical and electronic equipment" ("WEEE")), building components, retrieved landfill material, and other industrial waste streams. These waste streams may be "virgin," i.e., the residue after the removal of ferrous metals, or "non-virgin," i.e., the waste resulting from subsequent processing to recover certain metals and plastics.

Regardless of the technique, efforts are needed to reduce the moisture content of the combined ash, which ranges from about 20 to about 25 percent shortly after the combined ash comes off of a water cooling discharge of the incinerator boiler. combined ash coming off the water cooling discharge of the boiler is "muddy," which negatively affects both metal recovery and purity performance of magnetic separators (such as drum magnets, belt magnets, and pulley magnets) and the eddy current separator. The moisture content of the combined ash is typically reduced through either natural drying in piles (often for a few days or weeks before processing it for metal recovery) or through forced drying by means of a dryer. Natural drying, typically reduces moisture content to around 12 percent while forced drying usually brings the moisture content down to around 3 percent.

Typically the use of wet gravity separators and wet centrifuge separators on waste material has been unachievable. Waste material (such as IBA, ASR, WSR, and WEEE) may be flat, thin flakes or pin shaped or hair wires capable of creating nests and barriers that hamper free motion of heavier metals to be separated, thereby by making the waste stream of typical wet gravity separators and wet centrifuge separators unusable. For example, WO 2014/056065 A1 is directed to a method and systems for size-specific treating of incinerated waste. DE 41 23 277 Cl discloses a method for wet-separation of fractions from waste. EP 2 062 647 A2 discusses a method for preparing compressible granular incinerated waste. DE 41 32 938 A1 discloses wet-chemical sorting of mixtures of plastics to be recycled.

### SUMMARY

This disclosure generally provides devices, systems, and methods for recovering metal constituents from incinerator ash. A falling velocity separator is employed in combination with a centrifuge to separate and collect metals from the incinerator ash. The falling velocity separator uses a liquid, for example water, to separate particles within incinerator ash according to the particles' settling velocities. A magnetic separator may also be employed, which removes ferrous particles from a portion of the incinerator ash received, either directly or indirectly, from the falling velocity separator. The centrifuge further separates particles from the incinerator ash according to density of the particles.

This disclosure also includes a method for recovering metals from a waste stream containing metals (e.g., incinerator ash) having the steps of screening the waste stream containing metals (e.g., incinerator ash) to produce a first material containing metals; separating the first material containing metals using a falling velocity separator to produce a second material containing metals; separating the second material containing metals using a magnetic separator to produce a third material containing non-ferrous components including metals; and separating the third material containing non-ferrous components including metals using a centrifuge to produce a fourth material containing metals. The fourth material containing precious metals can be further processed using a finishing table.

The invention if defined by the appended independent claims 1 and 7. Preferred embodiments are set out in the dependent claims.

### BRIEF DESCRIPTION OF THE DRAWINGS

This disclosure is illustrated in the figures of the accompanying drawings which are meant to be illustrative and not limiting, in which like references are intended to refer to like or corresponding parts, and in which:
FIG. 1 illustrates an exemplary equipment layout diagram for a waste stream containing metal (e.g., incinerator ash) processing system accordance to the present disclosure;
FIG. 2 is a process flow diagram illustrating a method of incinerator ash processing according to the present disclosure; and
FIG. 3 illustrates a system for recovering metals from incinerator ash according to the present disclosure.

### DETAILED DESCRIPTION

Detailed embodiments of the systems, devices, and methods are disclosed herein, however, it is to be understood that the disclosed embodiments are merely illustrative of the systems, devices, and methods, which may be embodied in various forms. Therefore, specific functional details disclosed herein are not to be interpreted as limiting, but merely as a basis for the claims and as a representative basis for teaching one skilled in the art to variously employ the systems, devices, and methods disclosed herein

Generally, the present disclosure relates to devices, systems, and methods for recovering metal constituents from a waste stream containing metals (e.g., incinerator ash). A falling velocity separator and a centrifuge are employed to separate and collect metals from the incinerator ash. The falling velocity separator uses a liquid such as water, for example, to separate particles according to the particles' settling velocities. A magnetic separator may also be employed, which removes ferrous particles from a portion of the separated incinerator ash. The centrifuge further separates particles from the previously separated incinerator ash according to density of the particles. A falling velocity separator can include a pulsating jig.

While this disclosure is described with reference to incinerator ash, waste streams other than incinerator ash may be processed using the systems, devices, and methods described herein. For example, waste streams having characteristics similar to incinerator, such as ASR, WSR, and WEEE. may be processed. ASR, WSR, and WEEE, like incinerator ash, may include metal as hair wires or electronic pin connectors or metal with flat, flake-like shapes. A "mixed waste stream containing metals" includes, but is not limited to, these waste streams.

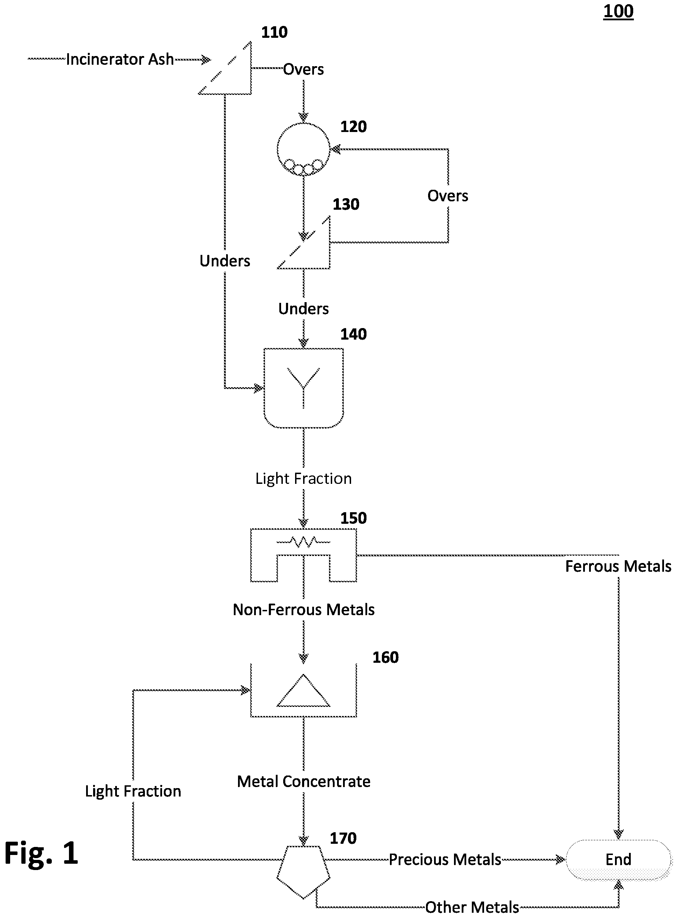

Referring to FIG. 1, an equipment layout 100 for a mixed waste stream containing metals (e.g., incinerator ash) processing system is described. The equipment layout 100 represents an exemplary layout and, therefore, various aspects may be omitted depending on implementation and design choice. For example, qualities of the processed incinerator ash may call for the omission of certain processing steps and the associated equipment.

Incinerator ash may optionally be sent to a screen 110 that separates the ash by size. The incinerator ash may include incinerator bottom ash ("IBA"), incinerator fly ash, or a combination of the two ashes. In an example, the screen 110 has one or more meshing with different size apertures of about 1 millimeter ("mm"). In other examples, the screen 110 may contain one or more mesh with apertures around 6 mm or greater. The apertures of the screen 110 may have circular, elliptical, rectangular, or other polygonal cross-sections. The different size mesh will generate different size fractions within a discrete range determined by the mesh sizes. By separating and narrowing size range of the material, the efficiency of the process, system or method may be adjusted to address variations in the infeed material.

Particles larger than the apertures of the screen 110 (i.e., "overs," which fail to pass through the screen 110) are further processed in a size reducer 120 (such as a ball mill, crusher, shredder, of the like). Similarly, if the screen 110 is omitted from the system, the incinerator ash originally introduced into the system is processed in the size reducer 120 in the first instance. The size reducer 120 reduces the size of the particles of the overs or incinerator ash, depending on the implementation.

The materials processed by the size reducer 120 are removed and subjected to a screen 130. Put another way, the screen 130 separates the material already processed by the size reducer 120. In an example, the screen 130 has a meshing with apertures of about 1 mm. In other examples, the screen 130 may contain mesh with apertures around 6 mm or greater. The apertures of the screen 130 may have circular, elliptical, rectangular, or other polygonal cross-sections. Overs of the screen 130 (i.e., particles larger than the apertures of the screen 130 that fail to pass through the screen 130) are returned to the size reducer 120 for further processing.

In an example, the size reducer 120 and screen 130 may be omitted, resulting in material that passes through the one or more mesh sizes of screen 110 being further processed while material that fails to pass through the one or more mesh sizes of screen 110 is not processed (i.e., removed from the system). In yet another example, the introduced incinerator ash may contain only particles smaller than about 6 mm, in which case the screen 110, the size reducer 120, and the screen 130 are not needed to achieve more consistent size uniformity for further processing. Therefore, incinerator ash introduced into the system according to this aforementioned example is directly introduced to a falling velocity separator 140, which is discussed in further detail below.

The "unders" (i.e., the different size fractions with particles smaller than the apertures of the screens 110, 130, which pass through the screens 110, 130) are introduced into the falling velocity separator 140. The falling velocity separator 140 uses the different settling velocities of particles in a liquid (such as water) to separate particles having different characteristics. For example, denser materials fall at a faster rate than less dense materials. Moreover, spherical materials fall faster through the liquid than less-spherical materials of similar density (that is materials flatter in shape).

One such falling velocity separator 140 is a rising current classifier. Solid material, such as the unders from the screen(s) 110, 130, is introduced into the rising current classifier as a slurry, such as a slurry with about 20 percent (%) solid material. A constant upward flow of water is established in a vessel of the rising current classifier. The water is evenly distributed across the width of the vessel by, for example, using perforated plates to distribute the water or by using a manifold to distribute the water. The slurry to be separated is introduced through the top of the classifier and the material distributes across the width of the classifier. Particles within the slurry having a higher settling velocity than the velocity of the rising current fall through the vessel of the rising current classifier. Particles with settling velocities less than that of the rising current velocity are carried upward in the flowing water toward the top of the vessel. Particles with settling velocities near that of the rising flow may accumulate to some extent in the mid-height section of the classifier.

The settling velocity of the particles in the rising current classifier is not based on free settling. Instead, the rising current classifier produces a hindered settling environment. Hindered settling occurs when the settling velocity of a particle is affected by the other particles in the fluid. This hindered settling environment improves the separation performance of the rising current classifier.

Metals or precious metal particles found in the incinerator ash typically have a flat shape. As such, even though these metals may have relatively high densities, the shape of the particles reduces the settling velocity of these particles. The hindered settling conditions within the rising current classifier also contribute to this reduced settling velocity. As a consequence, these particles have a settling velocity less than that of the rising current of water, resulting in the particles being carried upward in the rising current classifier. The rising water carries these particles over a weir where they are collected separately from the particles of the incinerator ash that have a settling velocity greater than the water current velocity. The velocity of the rising current can be adjusted to maximize the separation of desired constituents, such as precious metals. The rising current classifier may work in a continuous, rather than batch, mode.

In certain rising current classifiers, the rising current of water may carry the particles over a weir to a second stage, where some of the particles may drop out due to gravity and other particles may be carried to a third region of the classifier, representing the fraction of particles with the lowest settling velocity. With this type of rising current classifier, the desired metal particles are typically carried into the third region of the classifier. Representative rising current classifiers are manufactured by Mineral Engineering Processes Ltd., Floatex Separatios Ltd, Allmineral LLC, and Knelson, Ltd.

Another example of a falling velocity separator 140 is a pulsator jig or a pulsating jig separator. Solid material, such as the unders from the screen(s) 110, 130, is introduced into a jig bed, which is often a screen. There the material is thrust upward by a pulsating water column or body resulting in the particles being suspended in the water. As the pulse dissipates, the water level returns to its lower starting point and the particles within the unders once again settle on the jig bed. The upward and downward movement of the water column causes a hindered settling environment that causes the particles to stratify based on effective settling velocity. Particles having a higher settling velocity fall towards the bottom of the jig bed while particles with lower settling velocities remain at or near a top of the separated materials, thereby creating layers of particles with different settling velocities or specific gravity.

Yet another type of falling velocity separator 140 is a falling velocity screw separator (not illustrated). A falling velocity screw separator includes a screw auger positioned over a walled bed, with the entire device positioned on an incline. At the lower end of the incline is a weir with an adjustable height. A slurry of material, such as a slurry containing about 20% solid materials consisting of sized incinerator ash, is introduced to the falling velocity screw separator at the positions of each "flights" of the screw auger (a flight is a separate segment of a screw auger representing one 360 degree section of the screw). Each flight has an associated nozzle that delivers the slurry to the auger. Same as with the previous examples of falling velocity separators, the movement of the screw causes a hindered settling environment that causes the particles to stratify based on effective settling velocity. Particles that settle faster move to the bed of the falling velocity screw separator and the auger pulls these particles upwards, where the material is collected. The speed of the auger, the pitch of the bed, the height of the weir, and the flow rate of the slurry onto the flights of the auger affect separation of the material. These parameters may be adjusted to optimize separation. The falling velocity screw separator may work in a continuous, rather than batch, mode.

The "light" fraction (i.e., the fraction of particles with the slowest settling velocity) travel out of the bed over a weir and are collected. The particles that fall at a slower velocity, such as precious metals because of their shape, move to the top surface of the water, which moves down the bed towards the weir. The "heavy" fraction (e.g., cooper, zinc, ferrous, and others) as well faster sinking objects (e.g., spherical pieces and electronic pin connectors) can also be collected and processed. The metals contained in the heavy fraction can be further processed using the methods, devices, and processes herein or can be recovered used elsewhere.

The use of a falling velocity separator 140 allows for the removal of a heavy fraction that may decrease the performance of metals separation (e.g., because of shapes within the heavy fraction) at subsequent areas in the processing system. Incinerator ash with metal constituents typically include pin or hair wires. These pin or hair wires may hamper the ultimate separation of desired metals, such as precious metals, in a centrifuge (the use of a centrifuge is discussed in detail below). The heavy fraction is likely to contain the pins, hair wires or the like. In a centrifuge, the electronic pin connectors or wires (as an example) can interconnect, forming a nest of wires that ensnares the other metal components and prevents the desired separation of the heavier, precious metals, in the centrifuge. Under this situation, the pin wires should be removed from the waste stream prior to introducing the material to the centrifuge. In a falling velocity separator 140, the pin wires fall at a greater velocity than the precious metals and are removed or recovered from the processing system at that point of the process.

The light fraction (i.e., the particles with the slowest settling velocity) from the falling velocity separator 140, such as a rising current classifier or pulsating jig, is introduced into a magnetic separator 150. The magnetic separator 150 removes fine ferrous metal particles from the light fraction. The light fraction processed with the magnetic separator 150 is wet. The removed ferrous metals can be sold as is or may be further processed into a briquette-shaped end product. The "heavy" fraction (i.e., the fraction of particles with the fastest settling velocity) may travel out of the bed and can be further processed.

The non-ferrous or processed fraction of the light fraction is de-watered using, for example, a de-watering screen, and the unders of the de-watering screen is slurried to a concentration of between about 10% and about 30% solids and then sent to a centrifuge 160. The centrifuge 160 subjects the slurry to high centrifugal forces, causing the higher density material in the slurry to be separated from the less dense materials. The forces of the centrifuge 160 overcome any effects of particle shape, such that the heavy metals are separated from other material of the light fraction, regardless of the shape of the metals and other material.

The metal concentrate from the centrifuge 160 is then processed at a finishing table 170, such as a micron mill wave table, for example, which further separates the heavier metals from other constituents. The finishing table 170 operates on a standing wave principle. A standing wave of water or other fluid is generated in the finishing table 170. The table 170 is pitched and particles introduced onto the table stratify in the wave. Heavier particles fall down the pitched surface to the bottom of the table 170. Lighter particles remain at the top of the water and are carried by the wave motion to the top of the table in a direction opposite of the heavier particles. The heavy particles, which include precious metals and copper and zinc, are collected and sold. The lighter particles are collected and introduced back into the centrifuge 160 to reprocess. This reprocessing enables collecting heavier metals that may have been swept along with the lighter particles on the finishing table 170. A representative finishing table 170 is the M7 table from Action Mining Co. This step may be optional since, in some cases, the fraction will not contain enough metal to justify subjecting the metal concentrate to the table 170.

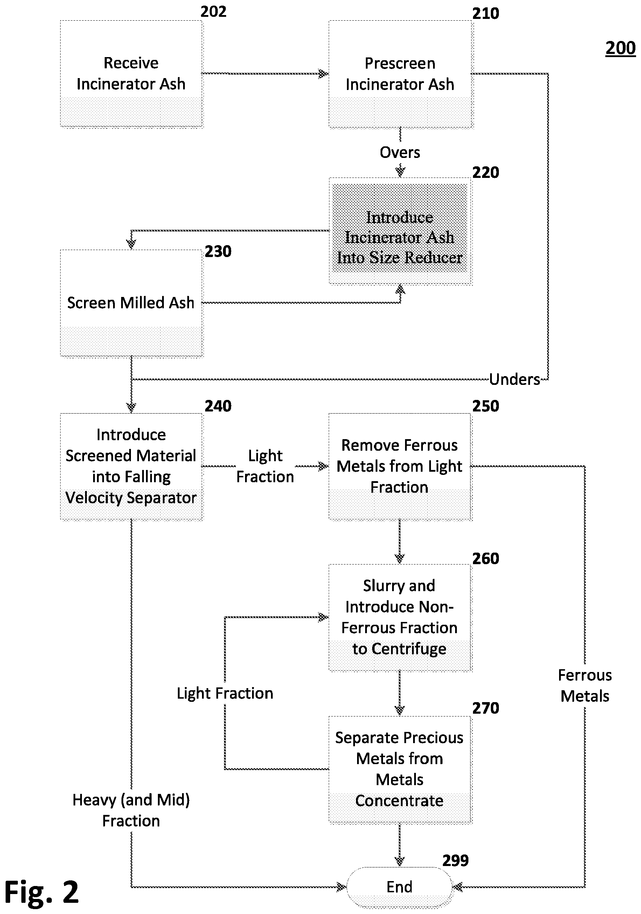

FIG. 2 illustrates a method 200 of incinerator ash processing according to the present disclosure. At block 202 incinerator ash is received. The incinerator ash may include IBA, fly ash, or a combination thereof. At block 210 the received incinerator ash is prescreened, such as with screen 110. This prescreening separates the ash by particle size. The unders from the prescreening (i.e., the particles that pass through the screen 110) are further processed at block 240 (described in detail below). The overs from the prescreening (i.e., the particles that do not pass through the screen 110) are processed at block 220 (described in detail below). Alternatively, prescreening at block 210 may be omitted from the method 200.

Again, waste streams other than incinerator ash may be processed with the described method 200. Waste streams such as ASR, WSR, and WEEE may be processed according to the method 200 also because they have characteristics similar to incinerator ash. For example, these waste streams may include metal as hair wires or pins or metal with flat, flake-like shapes.

At block 220, the overs from the prescreening (illustrated as block 210) or incinerator ash, if the prescreening processing is omitted, are introduced into a size reducer, such as the size reducer 120, or other size reducing equipment known in the art. The size reducer reduces the material introduced therein in size.

At block 230, material removed from the size reducer is screened, such as with screen 130. The overs from this screening process are returned to the size reducer for further size reduction (illustrated as block 220). The unders from screening process are further processed at a falling velocity separator (described in detail below with respect to block 240).

In an alternative implementation, processing at blocks 210, 220, and 230 may be omitted. For example, the incinerator ash received at block 202 may have been preprocessed such that the size of the particles are adequate for further processing. Such particle size may include being smaller than about 1 to about 6 mm, for example. In another alternative implementation, processing at block 220 may be omitted. In this alternative, the material that passes through the prescreening (illustrated as block 210) (if performed) is processed at block 240.

At block 240 the unders from the screening process (illustrated as block 230) and the unders from the prescreening process (illustrated as block 210) are introduced into a falling velocity separator, such as a rising current separator, pulsating jig, or a falling velocity screw separator. The heavy and, if appropriate for the type of falling velocity separator used, mid fractions are removed and not further processed (illustrated as end point 299). The light fraction is further processed at block 250 (described in detail below). In an alternative implementation, the light fraction may not be further processed. In this alternative, the light fraction from the falling velocity separator is the final product of the method 200.

At block 250 the light fraction from the falling velocity separator is subjected to a ferrous metal separator, such as the ferrous separator 150, which removes fine ferrous metal from the light fraction. The removed ferrous metals are collected and can be sold as is or may undergo further processing into a suitable form, such as briquettes (not illustrated).

In an alternative implementation, block 240 may be omitted and the unders from block 230 and the unders from block 210 are introduced directly into a centrifuge (described in detail with respect to block 260 below). For example, block 240 may be omitted for a waste stream with minimal pin or hair wires. In another example, the centrifuge used may be operable to adequately separate the metal constituents despite the presence of pin or hair wires.

At block 260 the non-ferrous component of the light fraction is slurried to produce a slurry with about 10% to about 30% solids. The slurry is introduced into the centrifuge, such as centrifuge 160. The centrifuge applies centrifugal force to the slurry, causing the solid particles of the slurry to separate based on density of the particles.

The metal concentrate from block 260 is introduced into a finishing table, such as finishing table 170, to separate precious metals from the metal concentrate (illustrated as block 270). Block 270 generates a heavy fraction, which includes precious metals and other valuable metals, and a light fraction that may include small particles of precious or valuable metals along with undesired materials. The light fraction is reintroduced into the centrifuge at block 260 to recover this precious or valuable metal.

In an alternative implementation, block 270 may be omitted. In this alternative, the metal concentrate from the centrifuge is the final product of the method 200.

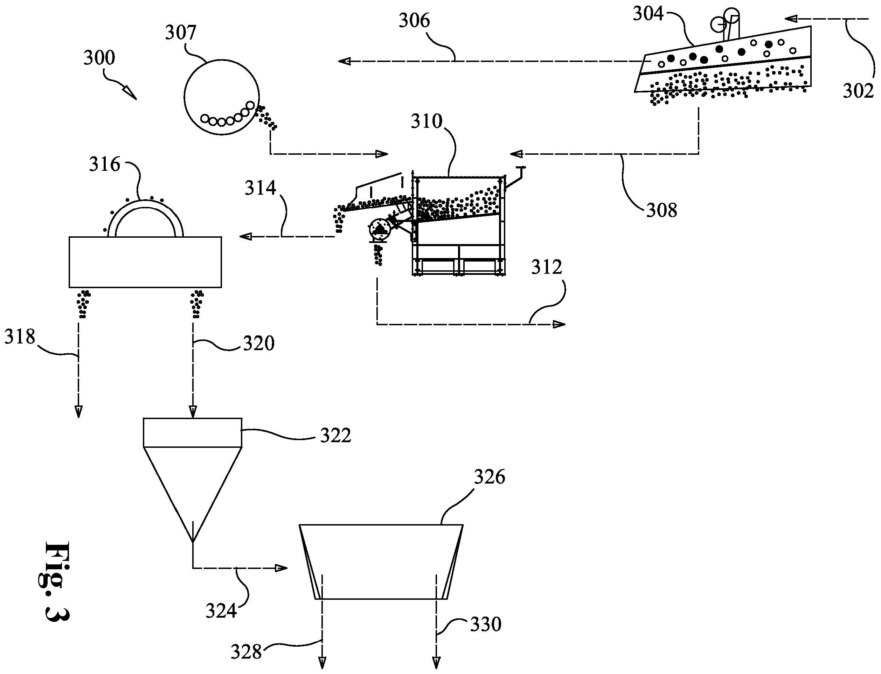

Referring to FIG. 3, a system 300 for recovering metals from incinerator ash is described. The system 300 represents an exemplary implementation and, therefore, various components may be omitted depending on implementation and design choice. For example, qualities of the processed incinerator ash may call for the omission of certain components.

A feed material 302, such as incinerator ash, is optionally received by a screen 304 that separates components of the ash by size. The incinerator ash may include incinerator bottom ash ("IBA"), incinerator fly ash, or a combination of the two ashes. In an example, the screen 304 has a meshing with apertures of about 1 millimeter ("mm"). In other examples, the screen 304 may contain mesh with apertures around 6 mm or greater. The apertures of the screen 304 may have circular, elliptical, rectangular, or other polygonal cross-sections.

Particles larger than the apertures of the screen 304 (i.e., "overs," 306 which fail to pass through the screen 304) are further processed in a size reducer 307 (such as a ball mill, crusher, shredder, of the like). Similarly, if the screen 304 is omitted from the system 300, the incinerator ash 302 originally introduced into the system 300 is processed in the size reducer 307 in the first instance. The size reducer 307 reduces the size of the components of the overs 306 or incinerator ash 302, depending on the implementation.

The materials processed by the size reducer 307 are removed and subjected to a screen (not illustrated). Put another way, the screen separates the material already processed by the size reducer 307. In an example, the screen has one or more meshing with apertures of about 1 mm. In other examples, the screen may contain mesh with apertures around 6 mm or greater. The apertures of the screen may have circular, elliptical, rectangular, or other polygonal cross-sections. Overs of the screens (i.e., particles larger than the apertures of the screen that fail to pass through the screen) are returned to the size reducer 307 for further processing.

In an example, the size reducer 307 and screen (not illustrated) may be omitted, resulting in material that passes through the screen 304 being further processed while material that fails to pass through the screen 304 is not processed (i.e., removed from the system 300). In yet another example, the introduced incinerator ash 302 may contain only particles smaller than about 6 mm, in which case the screen 304, the size reducer 307, and a second screen (not illustrated) between the size reducer 307 and a falling velocity separator 310 are not needed. Therefore, incinerator ash 302 introduced into the system 300 according to this aforementioned example is directly introduced to the falling velocity separator 310, which is discussed in further detail below.

The "unders" 308 (i.e., the particles smaller than the apertures of the screen 304, which pass through the screen 304) are introduced into the falling velocity separator 310. The falling velocity separator 310 uses the different settling velocities of particles in a liquid (such as water) to separate particles having different characteristics. For example, denser materials fall at a faster rate than less dense materials. Moreover, spherical materials fall faster through the liquid than less-spherical materials of similar density (that is materials flatter in shape).

One such falling velocity separator 310 is a rising current classifier. Solid material, such as the unders 308 from the screen 304, is introduced into the rising current classifier as a slurry, such as a slurry with about 20 percent (%) solid material. A constant upward flow of water is established in a vessel of the rising current classifier. The water is evenly distributed across the width of the vessel by, for example, using perforated plates to distribute the water or by using a manifold to distribute the water. The slurry to be separated is introduced through the top of the classifier and the material distributes across the width of the classifier. Particles within the slurry having a higher settling velocity than the velocity of the rising current fall through the vessel of the rising current classifier. Particles with settling velocities less than that of the rising current velocity are carried upward in the flowing water toward the top of the vessel. Particles with settling velocities near that of the rising flow may accumulate to some extent in the mid-height section of the classifier.

The settling velocity of the particles in the rising current classifier is not based on free settling. Instead, the rising current classifier produces a hindered settling environment. Hindered settling occurs when the settling velocity of a particle is affected by the other particles in the fluid. This hindered settling environment improves the separation performance of the rising current classifier.

Heavier metals or precious metal particles found in the incinerator ash 302, and consequently the unders 308, typically have a flat shape. As such, even though these metals may have relatively high densities, the shape of the particles reduces the settling velocity of these particles. The hindered settling conditions within the rising current classifier also contribute to this reduced settling velocity. As a consequence, these particles have a settling velocity less than that of the rising current of water, resulting in the particles being carried upward in the rising current classifier. The rising water carries these particles over a weir where they are collected separately from the particles of the incinerator ash that have a settling velocity greater than the water current velocity. The velocity of the rising current can be adjusted to maximize the separation of desired constituents, such as precious metals. The rising current classifier may work in a continuous, rather than batch, mode.

In certain rising current classifiers, the rising current of water may carry the particles over a weir to a second stage, where some of the particles may drop out due to gravity and other particles may be carried to a third region of the classifier, representing the fraction of particles with the lowest settling velocity. With this type of rising current classifier, the metal particles are typically carried into the third region of the classifier. Representative rising current classifiers are manufactured by Mineral Engineering Processes Ltd., Floatex Separatios Ltd, Allmineral LLC, and Knelson, Ltd.

Another example of a falling velocity separator 310 is a pulsator jig or a pulsating jig separator (which is illustrated in FIG. 3). Solid material, such as the unders 308 from the screen 304, is introduced into a jig bed, which is often a screen. There the material is thrust upward by a pulsating water column or body resulting in the particles being suspended in the water. As the pulse dissipates, the water level returns to its lower starting point and the particles within the unders once again settle on the jig bed. Particles having a higher settling velocity fall towards the bottom of the jig bed while particles with lower settling velocities remain at or near a top of the separated materials, thereby creating layers of particles with different settling velocities or specific gravity.

Yet another type of falling velocity separator 310 is a falling velocity screw separator. A falling velocity screw separator includes a screw auger positioned over a walled bed, with the entire device positioned on an incline. At the lower end of the incline is a weir with an adjustable height. A slurry of material, such as a slurry containing about 20% solid materials consisting of sized incinerator ash, is introduced to the falling velocity screw separator at the positions of each "flights" of the screw auger (a flight is a separate segment of a screw auger representing one 360 degree section of the screw). Each flight has an associated nozzle that delivers the slurry to the auger. Movement of the screw induces a hindered settling environment that causes the particles to stratify based on effective settling velocity. Particles that settle faster move to the bed of the falling velocity screw separator and the auger pulls these particles upwards, where the material is collected. The particles that fall at a slower velocity, such as precious metals because of their shape, move to the top surface of the water, which moves down the bed towards the weir. The "light" fraction (i.e., the fraction of particles with the slowest settling velocity) travel out of the bed over a weir and are collected. The speed of the auger, the pitch of the bed, the height of the weir, and the flow rate of the slurry onto the flights of the auger affect separation of the material. These parameters may be adjusted to optimize separation. The falling velocity screw separator may work in a continuous, rather than batch, mode.

Use of a falling velocity separator 310 allows for the removal of certain materials that may decrease the performance of metals separation at subsequent areas in the processing system 300. These hindering materials are illustrated as the heavies 312. Incinerator ash with metal constituents typically include pin or hair wires. These pin or hair wires may hamper the ultimate separation of desired metals, such as precious metals, in a centrifuge (the use of a centrifuge is discussed in detail below). In a centrifuge, the pin wires can interconnect, forming a nest of wires that ensnares the other metal components and prevents the desired separation of the heavier, precious metals, in the centrifuge. Under this situation, the pin wires should be removed from the waste stream prior to introducing the material to the centrifuge. In a falling velocity separator 310, the pin wires fall at a greater velocity than the precious metals and are removed from the processing system 300 at that point of the process.

The light fraction 314 (i.e., the particles with the slowest settling velocity) from the falling velocity separator 310, such as a rising current classifier or pulsating jig, is introduced into a magnetic separator 316. The magnetic separator 316 removes fine ferrous metal particles from the light fraction 314. The light fraction 314 processed by the magnetic separator 316 is wet. Ferrous metals 318 removed from the light fraction 314 can be sold as is or may be further processed into a briquette-shaped end product.

A non-ferrous fraction 320 of the light fraction 314 is de-watered using, for example, a de-watering screen, and the unders of the de-watering screen (the non-ferrous fraction 320) is slurried to a concentration of between about 10% and about 30% solids and then sent to a centrifuge 322. The centrifuge 322 subjects the slurry to high centrifugal forces, causing the higher density material in the slurry to be separated from the less dense materials. The forces of the centrifuge 322 overcome any effects of particle shape, such that the heavy precious metals are separated from other material of the non-ferrous fraction 320, regardless of the shape of the metals and other material.

The metal concentrate 324 produced by the centrifuge 322 is processed at a finishing table 326, such as a micron mill wave table, for example, which further separates the precious metals from other constituents. The finishing table 326 operates on a standing wave principle. A standing wave of water or other fluid is generated in the finishing table 326. The table 326 is pitched and particles introduced onto the table stratify in the wave. Heavier particles fall down the pitched surface to the bottom of the table 326. Lighter particles remain at the top of the water and are carried by the wave motion to the top of the table in a direction opposite of the heavier particles. The heavy particles, which include precious metals and copper and zinc, are collected as a precious metal concentrate 330 and sold. The lighter particles are collected and introduced back into the centrifuge 328 to reprocess (illustrated as 328). This reprocessing enables collecting precious metals that may have been swept along with the lighter particles on the finishing table 326. A representative finishing table 326 is the M7 table from Action Mining Co. This step may be optional since, in some cases, the metal concentration 324 will not contain enough metal to justify subjecting the metal concentrate 324 to the table 326.

Although specific embodiments of the disclosure have been described above in detail, the description is merely for purposes of illustration. It should be appreciated, therefore, that many aspects of the disclosure were described above by way of example only and are not intended as required or essential elements of the disclosure unless explicitly stated otherwise. The scope of the invention is solely defined by the following claims.

## Claims

1. A system for separating a mixed waste stream containing metal, wherein the waste stream is incinerator ash, comprising:
at least one screen (110) that receives the incinerator ash upstream of the falling velocity separator, the at least one screen (110) separating the incinerator ash according to size,
a falling velocity separator (140) that receives incinerator ash, the falling velocity separator (140) using a liquid to provide separated incinerator ash separated according to settling velocities of the incinerator ash particles,
a size reducer (120) downstream of the first screen (110) to further process the incinerator ash and reduce the size of the particles,
a magnetic separator (150) in communication with the falling velocity separator, the magnetic separator (150) receiving a portion of the separated incinerator ash, the magnetic separator (150) removing ferrous particles from the separated incinerator ash to produce processed incinerator ash,
a centrifuge (160) in communication with the magnetic separator (150), the centrifuge (160) separating the processed incinerator ash according to density of particles within the processed incinerator ash,
a finishing table (170) in communication with the centrifuge, the finishing table receiving a portion of the separated processed incinerator ash, the finishing table (170) separating metals from other particles of the separated processed waste stream using a standing wave of liquid.

2. The system of claim 1, wherein the screen (110) has a meshing with apertures of about 1 mm or wherein the screen (110) has a meshing with apertures around 6 mm or greater.

3. The system of claim 1, wherein a portion of the waste stream is received by the wet magnetic separator.

4. The system of claim 1, wherein the falling velocity separator is a pulsating jig.

5. The system of claim 1, wherein the falling velocity separator is a rising current classifier.

6. The system of claim 1, wherein the falling velocity separator is a screw separator.

7. A method for recovering metals from a mixed waste stream containing metals, wherein the waste stream is incinerator ash, comprising the steps of:
receiving the incinerator ash to produce a first material containing metals;
prescreening the waste stream;
size reducing materials in the waste stream;
separating the first material using a falling velocity separator to produce a second material containing a heavy fraction and a light fraction;
separating the light fraction containing the metals using a magnetic separator to produce a third material containing processed components including the metals;
separating the third material using a centrifuge to produce a fourth material containing the metals;
separating the fourth material containing the metals using a finishing table to further concentrate the metals.

8. The method of claim 7, wherein the concentration of metals in the heavy fraction is higher than in the waste stream.

9. The method of claim 7, wherein the concentration of metals in the light fraction is less than in the waste stream.

10. The method of claim 7, wherein the falling velocity separator uses a fluid to produce the second material containing the metals.

11. The method of claim 10, wherein the fluid is water.

12. The method of claim 7, wherein the falling velocity separator separates the first material containing the desired metals by producing a hindered settling environment.

13. The method of claim 7, wherein the falling velocity separator is a pulsating jig.

14. The method of claim 7, wherein the falling velocity separator is a rising current classifier.

15. The method of claim 7, wherein the falling velocity separator is a screw separator.

## Patentansprüche

1. System zum Separieren eines gemischten, metallhaltigen Abfallstroms, wobei der Abfallstrom Verbrennungsofenasche ist, beinhaltend:
mindestens ein Sieb (110), das die Verbrennungsasche stromaufwärts des Fallgeschwindigkeitsabscheiders aufnimmt, wobei das mindestens eine Sieb (110) die Verbrennungsasche nach der Größe trennt,
einen Fallgeschwindigkeitsabscheider (140), der die Verbrennungsasche aufnimmt, wobei der Fallgeschwindigkeitsabscheider (140) eine Flüssigkeit verwendet, um abgetrennte Verbrennungsasche bereitzustellen, die nach den Absetzgeschwindigkeiten der Verbrennungsascheteilchen getrennt ist,
einen Zerkleinerer (120) stromabwärts des ersten Siebs (110), um die Verbrennungsasche weiter zu verarbeiten und die Größe der Partikel zu verringern,
einen Magnetabscheider (150) in Verbindung mit dem Fallgeschwindigkeitsabscheider, wobei der Magnetabscheider (150) einen Teil der abgeschiedenen Verbrennungsasche aufnimmt, wobei der Magnetabscheider (150) eisenhaltige Teilchen aus der abgeschiedenen Verbrennungsasche entfernt, um aufbereitete Verbrennungsasche zu erzeugen,
eine Zentrifuge (160), die mit dem Magnetabscheider (150) in Verbindung steht, wobei die Zentrifuge (160) die aufbereitete Verbrennungsasche entsprechend der Dichte der Partikel innerhalb der aufbereiteten Verbrennungsasche trennt,
einen Endbearbeitungstisch (170), der mit der Zentrifuge in Verbindung steht, wobei der Endbearbeitungstisch einen Teil der abgetrennten aufbereiteten Verbrennungsofenasche aufnimmt, wobei der Endbearbeitungstisch (170) Metalle von anderen Partikeln des abgetrennten aufbereiteten Abfallstroms unter Verwendung einer stehenden Flüssigkeitswelle abtrennt.

2. System nach Anspruch 1, wobei das Sieb (110) eine Maschenweite mit Öffnungen von etwa 1 mm aufweist oder wobei das Sieb (110) eine Maschenweite mit Öffnungen um 6 mm oder größer aufweist.

3. System nach Anspruch 1, wobei ein Teil des Abfallstroms von dem nassen Magnetabscheider aufgenommen wird.

4. Das System nach Anspruch 1, wobei der Fallgeschwindigkeitsabscheider eine pulsierende Vorrichtung ist.

5. System nach Anspruch 1, wobei der Fallgeschwindigkeitsabscheider ein Klassierer mit aufsteigendem Strom ist.

6. System nach Anspruch 1, wobei der Fallgeschwindigkeitsabscheider ein Schneckenseparator ist.

7. Verfahren zur Rückgewinnung von Metallen aus einem gemischten Abfallstrom, der Metalle enthält, wobei der Abfallstrom Verbrennungsofenasche ist, umfassend die Schritte:
Aufnehmen der Verbrennungsofenasche, um ein erstes Material zu erzeugen, das Metalle enthält;
Vorsortieren des Abfallstroms;
Zerkleinern der Materialien in dem Abfallstrom;
Trennen des ersten Materials unter Verwendung eines Fallgeschwindigkeitsabscheiders, um ein zweites Material zu erzeugen, das eine schwere Fraktion und eine leichte Fraktion enthält;
Abtrennen der die Metalle enthaltenden Leichtfraktion unter Verwendung eines Magnetabscheiders, um ein drittes Material zu erzeugen, das aufbereitete Komponenten einschließlich der Metalle enthält;
Abtrennen des dritten Materials unter Verwendung einer Zentrifuge, um ein viertes Material zu erzeugen, das die Metalle enthält;
Abtrennen des vierten Materials, das die Metalle enthält, unter Verwendung eines Endfertigungstisches, um die Metalle weiter zu konzentrieren.

8. Verfahren nach Anspruch 7, wobei die Konzentration der Metalle in der Schwerfraktion höher ist als in dem Abfallstrom.

9. Verfahren nach Anspruch 7, wobei die Konzentration der Metalle in der Leichtfraktion geringer ist als im Abfallstrom.

10. Verfahren nach Anspruch 7, wobei der Fallgeschwindigkeitsabscheider ein Fluid verwendet, um das zweite Material zu erzeugen, das die Metalle enthält.

11. Verfahren nach Anspruch 10, wobei das Fluid Wasser ist.

12. Verfahren nach Anspruch 7, wobei der Fallgeschwindigkeitsabscheider das erste Material, das die gewünschten Metalle enthält, durch Erzeugen einer behinderten Absetzumgebung abscheidet.

13. Verfahren nach Anspruch 7, wobei der Fallgeschwindigkeitsabscheider eine pulsierende Vorrichtung ist.

14. Verfahren nach Anspruch 7, wobei der Fallgeschwindigkeitsabscheider ein Klassierer mit aufsteigendem Strom ist.

15. Verfahren nach Anspruch 7, wobei der Fallgeschwindigkeitsseparator ein Schneckenseparator ist.

## Revendications

1. Système de séparation d'un flux de déchets mixtes contenant du métal, dans lequel le flux de déchets est constitué de cendres d'incinérateur, comprenant :
au moins un tamis (110) qui reçoit les cendres d'incinération en amont du séparateur à vitesse de chute, le au moins un tamis (110) séparant les cendres d'incinération en fonction de leur taille,
un séparateur à vitesse de chute (140) qui reçoit les cendres d'incinération, le séparateur à vitesse de chute (140) utilisant un liquide pour fournir des cendres d'incinération séparées en fonction des vitesses de sédimentation des particules de cendres d'incinération,
un réducteur de taille (120) en aval du premier écran (110) pour traiter davantage les cendres d'incinération et réduire la taille des particules,
un séparateur magnétique (150) en communication avec le séparateur à vitesse de chute, le séparateur magnétique (150) recevant une partie des cendres d'incinération séparées, le séparateur magnétique (150) éliminant les particules ferreuses des cendres d'incinération séparées pour produire des cendres d'incinération traitées,
une centrifugeuse (160) en communication avec le séparateur magnétique (150), la centrifugeuse (160) séparant les cendres d'incinération traitées selon la densité des particules dans les cendres d'incinération traitées,
une table de finition (170) en communication avec la centrifugeuse, la table de finition recevant une partie des cendres d'incinération traitées séparées, la table de finition (170) séparant les métaux des autres particules du flux de déchets traités séparés en utilisant une onde stationnaire de liquide.

2. Système de la revendication 1, dans lequel le tamis (110) a un maillage avec des ouvertures d'environ 1 mm ou dans lequel le tamis (110) a un maillage avec des ouvertures d'environ 6 mm ou plus.

3. Le système de la revendication 1, dans lequel une partie du flux de déchets est reçue par le séparateur magnétique humide.

4. Le système de la revendication 1, dans lequel le séparateur à vitesse de chute est un jig pulsé.

5. Système selon la revendication 1, dans lequel le séparateur à vitesse descendante est un classificateur à courant ascendant.

6. Le système de la revendication 1, dans lequel le séparateur à vitesse de chute est un séparateur à vis.

7. Procédé de récupération de métaux à partir d'un flux de déchets mixtes contenant des métaux, dans lequel le flux de déchets est une cendre d'incinérateur, comprenant les étapes consistant à :
recevoir les cendres d'incinérateur pour produire un premier matériau contenant des métaux ;
présélectionner le flux de déchets ;
réduction de la taille des matériaux dans le flux de déchets ;
séparer le premier matériau en utilisant un séparateur à vitesse de chute pour produire un second matériau contenant une fraction lourde et une fraction légère ;
la séparation de la fraction légère contenant les métaux à l'aide d'un séparateur magnétique pour produire un troisième matériau contenant des composants traités incluant les métaux ;
la séparation du troisième matériau à l'aide d'une centrifugeuse pour produire un quatrième matériau contenant les métaux ;
séparer le quatrième matériau contenant les métaux en utilisant une table de finition pour concentrer davantage les métaux.

8. Procédé de la revendication 7, dans lequel la concentration de métaux dans la fraction lourde est plus élevée que dans le flux de déchets.

9. Procédé de la revendication 7, dans lequel la concentration de métaux dans la fraction légère est inférieure à celle du flux de déchets.

10. Procédé de la revendication 7, dans lequel le séparateur à vitesse de chute utilise un fluide pour produire le second matériau contenant les métaux.

11. Procédé selon la revendication 10, dans lequel le fluide est de l'eau.

12. Procédé de la revendication 7, dans lequel le séparateur à vitesse de chute sépare le premier matériau contenant les métaux souhaités en produisant un environnement de décantation entravée.

13. Procédé de la revendication 7, dans lequel le séparateur à vitesse de chute est un jig pulsé.

14. Procédé de la revendication 7, dans lequel le séparateur à vitesse descendante est un classificateur à courant ascendant.

15. Procédé selon la revendication 7, dans lequel le séparateur à vitesse de chute est un séparateur à vis.
